# EUROPEAN PATENT SPECIFICATION

(11) **EP 0 844 404 B1**
(45) Date of publication and mention of the grant of the patent: **17.10.2001**
(21) Application number: 97119706.6
(22) Date of filing: 11.11.1997
(51) Int. Cl.: F16B 21/08, F16B 5/06

(54) **Fastener for panels or components**
Verbindungselement für Platten oder Komponenten
Elément de fixation pour panneaux et composants

(30) Priority: 26.11.1996 IT TO960951
(43) Date of publication of application: 27.05.1998
(73) Proprietor: FIAT AUTO S.p.A., 10135 Torino (IT)
(72) Inventor: Pierallini, Mauro, 10100 Torino (IT)
(74) Representative: Di Francesco, Gianni

(56) References cited:
- FR-A- 1 452 925
- GB-A- 777 870
- US-A- 3 893 208
- US-A- 4 176 428
- US-A- 4 778 320

## Description

The present invention refers to a blocking system of limited size which, besides blocking a first member, can also hold a second member. Both members are removably held.

Often, especially in the automobile field, there is the need to block two components or two panels, close one to the other or above the other, for operational and/or aesthetic reasons. Further it might be necessary that both engaged elements are readily removable.

This means additional assembly operations and also additional blocking points in the parts that have to be connected, which implies higher production costs besides having an aesthetic problem.

A blocking system in form of a shap fastener is known from GB-A-777 870. However said fastener can be employed for fastening only one panel or component to its base.

Object of the present invention is to provide a blocking system which allows to overcome the above inconveniences. Such an object is reached by the present invention through a blocking system as claimed in claim one.

Further characteristics and advantages will be clear from the following description referred to the attached figures, in which:
Figure 1 is a sectional view of the blocking system according to the invention;
Figure 2 is a sectional view, along line II-II, of Figure 1;

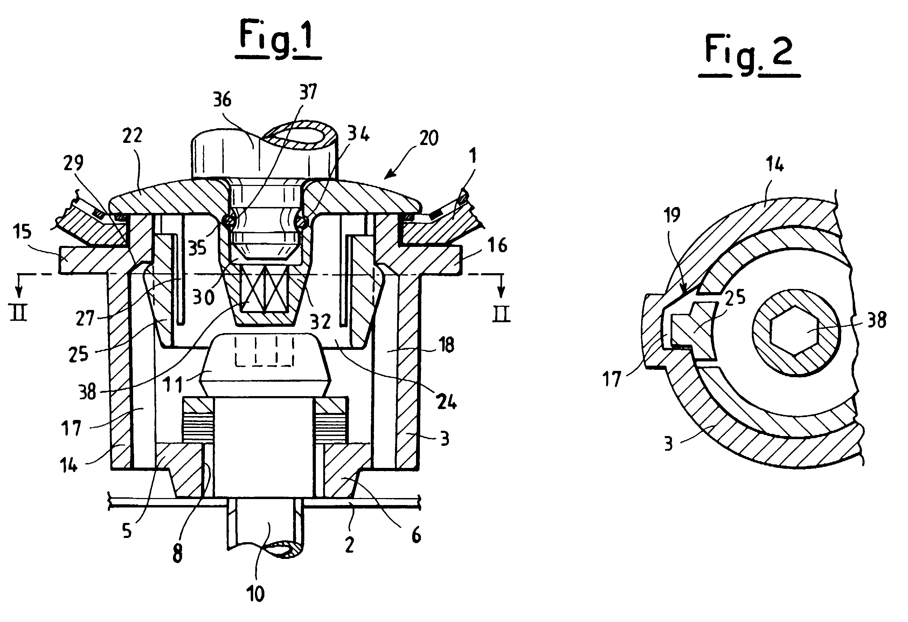

Referring to the figures 1 and 2, a first member is indicated with numeral 1, for example part of a car dashboard, which has to be attached in a stable but removable way to the body 2. The blocking system in accordance with the invention comprises, in the shown case, a body 3 substantially cylindrical, having a cuplike shape, which presents on its bottom wall 5 a projection 6, coaxial and with reduced diameter, supported on the fixed part (car body) to which the blocking system must be connected. The projection 6 allows to reduce the supporting surface and to utilise the blocking system also when there are only small areas available. In the projection 6 a hole 8 is provided to allow the passage of a bolt 11 with shank 10, provided with a washer, in order to engage the body 3 on the supporting member. The body 3 presents on the upper edge of its side wall 14, a couple of radial projections 15 and 16. In correspondence to said projections, on most of the body 3 wall 14, there are provided two recesses 17, 18, presenting a transversal section with a rectangular plan and with a chamfer 19 on one of the edges, parallel to the body 3 axis. Member 1 (in this case the dashboard) is held on body 3 by means of a bush 20, inserted into a hole provided thereon.

Said bush 20 has a mushroom shape, and its head 22, radially extending from stem 24, is able to engage first member 1 to bias it against body 3 on the radial projections 15, 16, while the hollow stem 24 is inserted within said body 3. Said stem has at least two teeth 25, integrally provided in the wall.

Said teeth can withdraw through slots 27 during the insertion of stem 24 into the body 3.

Said teeth, once insertion is completed, go back in place to engage an upper wall 29 defined by the recesses 17, 18 and by the edge of the wall 14, thus holding bush 20 on body 3 in the attached position. Bush 20 presents an open axial cavity 30 on the upper surface of head 22, located in a body 32 inwardly projecting from stem 24 and coaxial thereto. Said cavity is provided with a radial recess 34 to receive a snap ring 35.

A pin 36 might be inserted into cavity 30, having a diameter substantially equal to the hole inside diameter. Pin 36 is provided with a circumferencial groove 37 to receive a portion of the snap ring 35 which holds the pin in the hole. Pin 36 might be connected, through a known technique, to a second member (not shown) to be held or it might even be integral part thereof.

Taking out the pin 36 will be possible by simply exercising a drawing force sufficient to win the spring 35 resistance. To this intent the groove 37 profile might be designed in order to freely adjust the reaction force required to draw the pin.

The end part 38 of cavity 30 presents a section with an hexagonal plan to allow, by inserting the right tool, the rotation of bush 20, in order to cause, thanks to the chamfer 19, the disengagement of teeth 25 from wall 29, in order to take out the bush itself.

According to the above description it is understood that the system of the invention solves in a single, economical and aesthetically acceptable way the problem of removably fixing two members in the same point. All the components of the described system are made of plastic materials, except for spring 35, and therefore they will not wear over time and they will have reduced weight and cost.

Obviously all the blocking system components are made of plastic material, however any other kind of material may be used, without departing from the scope of the present invention.

## Claims

1. A blocking system suitable to removably maintain at least first and second member in the same engagement point, composed by a body (3) engageable by known means on a support and a bush (20) suitable to be snap engaged to said body (3) to hold first (1) of said at least two members between the bush (20) and the body (3), **characterised in that** said body (3) has a substantially cup-like shape and is provided, inside its free cavity and on its side wall (14), with recesses (17,18) for said snap engagement; and **in that** said bush (20) has a substantially mushroom shape, suitable to have its stem (24) received in said free cavity of the cup like body (3), and to hold the first (1) of said two, at least, members between radial projections (15,16) from an upper edge of said side wall (14) of the cup-like body (3) and the outer radial part of the head (22) of said bush (20); the stem of said mushroom bush (20) being provided with toothed elements (25) suitable to be snap engaged in the recesses (17,18) of the cup-like body (3) and with an axial cavity (30) provided with an elastic retaining element (35); and further **characterised in that** it comprises a pin (36) with its end part having a diameter substantially equal to the diameter of said axial cavity (30), suitable to be received in said cavity, provided with means (34) for the engagement of said elastic retaining element, said pin being connectable by known means to the second of said two, at least, members to be held.

2. A blocking system according to claim 1, **characterised in that** said body (3) is provided with a lower axial projection (6) with a diameter smaller than the body diameter.

3. A blocking system according to claim 2, **characterised in that** said projection (6) is provided with an axial hole (8).

4. A blocking system according to claim 1, **characterised in that** one edge of said snap engagement recesses is chamfered (19).

5. A blocking system according to claim 1, **characterised in that** the means for the engagement of said elastic retaining element (35) provided in said axial cavity (30) located in the bush (20) is a radial recess (34).

6. A blocking system according to claim 1, **characterised in that** said elastic element is a snap ring (35).

## Patentansprüche

1. Klemmsystem, das zum lösbaren Halten von wenigstens einem ersten und einem zweiten Bauteil an der selben Haltestelle geeignet ist, bestehend aus einem Körper (3), der durch bekannte Mittel an einer Unterlage anbringbar ist, und einer Buchse (20), die geeignet ist, mit dem Körper (3) zu verrasten, um ein erstes (1) der wenigstens zwei Bauteile zwischen der Buchse (20) und dem Körper (3) zu halten, **dadurch gekennzeichnet, dass** der Körper (3) eine im Wesentlichen becherartige Form hat und innerhalb seines freien Hohlraums und an seiner Seitenwandung (14) mit Ausnehmungen (17, 18) für den Rasteingriff ausgestattet ist, und dass die Buchse (20) eine im Wesentlichen Pilzform besitzt, deren Stiel (24) in der freien Aushöhlung des becherartigen Körpers (3) aufnehmbar ist und die dazu geeignet ist, das erste (1) der wenigstens zwei Bauteile zwischen radialen Vorsprüngen (15, 16) einer oberen Kante der Seitenwandung (14) des becherartigen Körpers (3) und des äußeren radialen Teils des Kopfes (22) der Buchse (20) zu halten, wobei der Stiel der pilzförmigen Buchse (20) mit Zinken (25) versehen ist, die dazu in der Lage sind, in die Ausnehmungen (17, 18) des becherartigen Körpers (3) einzuschnappen, und mit einem axialen Hohlraum (30), der mit einem elastischen Halteelement (35) versehen ist, und des Weiteren **dadurch gekennzeichnet, dass** es einen Stift (36) umfasst, dessen Endteil einen Durchmesser aufweist, der im Wesentlichen dem Durchmesser des axialen Hohlraums (30) entspricht, und das in dem Hohlraum aufnehmbar ist, und der mit Mitteln (34) zum Halten des elastischen Halteelementes ausgestattet ist, wobei der Stift durch bekannte Mittel mit dem zweiten der wenigstens zwei Bauteile, die zu halten sind, verbindbar ist.

2. Klemmsystem nach Anspruch 1,
**dadurch gekennzeichnet, dass** der Körper (3) mit einem unteren axialen Vorsprung (6) ausgestattet ist, der einen Durchmesser besitzt, der kleiner ist als der Durchmesser des Körpers.

3. Klemmsystem nach Anspruch 2,
**dadurch gekennzeichnet, dass** der Vorsprung (6) mit einem Axialloch (8) versehen ist.

4. Klemmsystem nach Anspruch 1,
**dadurch gekennzeichnet, dass** eine Kante der zum Rasteingriff dienenden Ausnehmungen abgeschrägt (19) ist.

5. Klemmsystem nach Anspruch 1,
**dadurch gekennzeichnet, dass** das Mittel zum Halten des elastischen Halteelementes (35), das in dem in der Buchse liegenden, axialen Hohlraum (30) vorhanden ist, eine radiale Ausnehmung (34) ist.

6. Klemmsystem nach Anspruch 1,
**dadurch gekennzeichnet, dass** das elastische Element ein Schnappring (35) ist.

## Revendications

1. Système de blocage adapté pour maintenir de manière à pouvoir être déplacés au moins un premier et un second éléments au niveau d'un même point de mise en prise, composé d'un corps (3) susceptible de venir en prise par des moyens connus sur un support et une douille (20) adaptée pour être mise en prise par encliquetage avec ledit corps (3) pour maintenir le premier (1) desdits au moins deux éléments entre la douille (20) et le corps (3), **caractérisé en ce que** ledit corps (3) a sensiblement une forme de verre et est muni, à l'intérieur de sa cavité libre et sur sa paroi latérale (14), de creux (17,18) pour ladite mise en prise par encliquetage ; et **en ce que** ladite douille (20) a sensiblement une forme de champignon, adaptée pour que sa tige (24) soit reçue dans ladite cavité libre du corps en forme de verre (3), et pour maintenir le premier (1) desdits au moins deux éléments entre des saillies radiales (15, 16) à partir d'un bord supérieur de ladite paroi latérale (14) du corps en forme de verre (3) et de la partie radiale extérieure de la tête (22) de ladite douille (20) ; la tige de ladite douille en forme de champignon (20) étant munie d'éléments dentés (25) adaptés pour être mis en prise par encliquettement dans les creux (17, 18) du corps en forme de verre (3) et d'une cavité axiale (30) munie d'un élément de retenue élastique (35) ; et **caractérisé en outre en ce qu'**il comprend une broche (36) dont la partie d'extrémité a un diamètre sensiblement égal au diamètre de ladite cavité axiale (30), adaptée pour être reçue dans ladite cavité, munie de moyens (34) pour la mise en prise dudit élément de retenue élastique, ladite broche étant susceptible d'être reliée par des moyens connus au second desdits, au moins, éléments destinés à être maintenus.

2. Système de blocage selon la revendication 1, **caractérisé en ce que** ledit corps (3) est muni d'une saillie axiale inférieure (6) avec un diamètre inférieur au diamètre du corps.

3. Système de blocage selon la revendication 2, **caractérisé en ce que** ladite saillie (6) est munie d'un trou axial (8).

4. Système de blocage selon la revendication 1, **caractérisé en ce qu'**un bord desdits creux pour mise en prise par encliquetage est chanfreiné (19)

5. Système de blocage selon la revendication 1, **caractérisé en ce que** les moyens pour la mise en prise dudit élément de retenue élastique (35) prévu dans ladite cavité axiale (30) située dans la douille (20) sont un creux radial (34).

6. Système de blocage selon la revendication 1, **caractérisé en ce que** ledit élément élastique est un jonc à ergots (35).
